# EUROPEAN PATENT APPLICATION

(11) **EP 4 488 613 A1**
(43) Date of publication of application: **08.01.2025**
(21) Application number: 23763297.1
(22) Date of filing: 20.02.2023
(51) Int. Cl.: F42B 3/10, B60R 21/264

(54) **INITIATOR, INITIATOR DEVICE, AND METHOD FOR MANUFACTURING INITIATOR**

(30) Priority: 02.03.2022 JP 2022031921
(71) Applicant: Daicel Corporation, Osaka-shi, Osaka 530-0011 (JP)
(72) Inventor: SABMEK, Jackkrit, Tokyo 108-8230 (JP); KOMORI, Shougo, Tokyo 108-8230 (JP); FUJII, Kohei, Tokyo 108-8230 (JP)
(74) Representative: Müller-Boré & Partner Patentanwälte PartG mbB
(86) International application number: PCT/JP2023/006009
(87) International publication number: WO 2023/167038

(57) **Abstract**

An initiator includes a pair of electrodes, an insulating member interposed between the pair of electrodes, a cover body covering one end side of the pair of electrodes together with a space around the pair of electrodes, and an explosive with which the space inside the cover body is filled. The pair of electrodes include, in the space, a discharge gap where a dielectric strength is lower than a dielectric strength of a portion where the insulating member is interposed. In this way, provided is a technology that enables ignition without a bridge wire and facilitates manufacture of an initiator.

## Description

### Technical Field

The present invention relates to an initiator, an initiator device, and a method for manufacturing an initiator.

### Background Art

There has been proposed an initiator including, as components, a pair of electrodes integrated via an insulating member, a bridge wire connected to both electrodes and configured to generate heat by energization, and a case accommodating, in an interior thereof, the bridge wire and an explosive initiated by heat generation of the bridge wire in a sealed state (Patent Document 1).

### Citation List

### Patent Document

Patent Document 1: JP 2003-285712 A

### Summary of Invention

### Technical Problem

In the initiator in the related art, the bridge wire is welded and thus electrically connected to the electrodes, requiring labor for welding at the time of manufacture. Further, to ignite the explosive by the heat generated by the bridge wire, the bridge wire and the explosive are disposed in pressure contact with each other. However, applying a pressure greater than necessary to the bridge wire at the time of pressure contact damages the bridge wire, requiring caution at the time of manufacture. Furthermore, when damage or poor welding of this bridge wire occurs, ignitability is greatly affected. Thus, the presence or absence of damage and the welding state must be strictly controlled, resulting in the problem of an increase in management burden and a decrease in yield, making it difficult to easily manufacture the initiator.

The technology of the present disclosure has been made in view of the above problems, and an object thereof is to provide a technology that enables ignition without a bridge wire and facilitates manufacture of an initiator.

### Solution to Problem

To solve the above problem, the technology of the present disclosure adopts the following configuration. That is, according to an aspect of the technology of the present disclosure, an initiator includes a pair of electrodes, an insulating member interposed between the pair of electrodes, a cover body covering one end side of the pair of electrodes together with a space around the pair of electrodes, and an explosive with which the space inside the cover body is filled. The pair of electrodes include, in the space, a discharge gap where a dielectric strength is lower than a dielectric strength of a portion where the insulating member is interposed.

In the initiator, a void may be formed between the explosive with which the space is filled and the discharge gap, and the explosive and the discharge gap may be disposed within a predetermined distance of each other.

In the initiator, one of the pair of electrodes may be a first electrode having a linear shape and the other may be a second electrode including a ring portion having a ring shape, and at least part of the first electrode may be inserted into a through hole of the ring portion, and the electrode may be provided between an inner circumferential surface of the ring portion defining the through hole and the first electrode.

The initiator may further include an inner tubular portion having a tubular shape extending in one direction and including an internal space open at an end portion of the inner tubular portion. The inner tubular portion may be disposed with the opening facing the electrode in the space of the cover body, and the internal space of the inner tubular portion may be filled with the explosive.

In the initiator, the second electrode may further include an inner tubular portion extending in one direction and including an internal space open at an end portion of the inner tubular portion. The inner tubular portion may be disposed in the space of the cover body while abutting against the ring portion at the end portion with the opening facing the electrode, include an extending portion extending from a circumferential wall of the inner tubular portion toward the first electrode, and form a discharge gap between the first electrode and the extending portion. The internal space of the inner tubular portion may be filled with the explosive.

In the initiator, the extending portion may be an annular member protruding toward the internal space from an end portion of the circumferential wall of the inner tubular portion on the ring portion side.

In the initiator, the extending portion may extend from part of the circumferential wall of the inner tubular portion in a direction orthogonal to an extending direction of the internal space, overlap the first electrode when viewed from the extending direction, and be disposed at a predetermined interval from the first electrode in the extending direction, the interval being the discharge gap.

In the initiator, the cover body may have conductivity and constitute part of the second electrode, and the discharge gap may be formed between the first electrode and the cover body.

According to an aspect of the technology of the present disclosure, an initiator device includes the initiator and a power supply unit configured to supply power to the pair of electrodes, causing a discharge in the discharge gap.

According to an aspect of the technology of the present disclosure, a method for manufacturing an initiator includes integrating a first electrode and a second electrode with an insulating member interposed between the first electrode and the second electrode to form an electrode unit with a discharge gap between the first electrode and the second electrode, filling an explosive accommodation portion in a cover body having a bottomed tubular shape with an explosive from an opening of the cover body, fitting the electrode unit into the opening of the cover body such that the discharge gap of the electrode unit is brought into contact with or close to the explosive with which the cover body is filled, and integrally joining the cover body and the electrode unit.

The method for manufacturing an initiator may further include pressing and compacting the explosive accommodated in the explosive accommodation portion, and forming a recessed portion on a surface of the explosive that comes into contact with the electrode unit. In the fitting of the electrode unit, the electrode unit may be fitted into the opening of the cover body such that the discharge gap and the recessed portion are adjacent to each other.

### Advantageous Effects of Invention

According to the technology of the present disclosure, it is possible to provide a technology that enables ignition without a bridge wire and facilitates manufacture of an initiator.

### Brief Description of Drawings

FIG. 1 is a view illustrating a configuration of a gas generator including an initiator according to a first embodiment.
FIG. 2 is an axial cross-sectional view schematically illustrating an internal structure of the initiator according to the first embodiment, along a center axis X thereof.
FIG. 3 is a cross-sectional view of the initiator taken along line A-A in FIG. 2.
FIG. 4 is a view for describing a manufacturing procedure (assembly procedure) of the initiator according to the first embodiment.
FIG. 5 is a view for describing a situation corresponding to a second electrode connection process.
FIG. 6 is a view for describing a situation corresponding to an electrode integration process.
FIG. 7 is a view for describing a situation corresponding to an explosive filling process.
FIG. 8 is a view for describing a situation corresponding to an electrode unit fitting process.
FIG. 9 is a view for describing a situation corresponding to a joining process.
FIG. 10 is a view illustrating a state in which a high voltage for actuation is applied between electrodes.
FIG. 11 is a view illustrating a configuration of a gas generator according to a second embodiment.
FIG. 12 is a view illustrating a state of a push button pressed to a position in front of a locking portion.
FIG. 13 is a view illustrating a state of a hammer colliding with a piezoelectric element.
FIG. 14 is a view illustrating a configuration of an initiator device according to a third embodiment.
FIG. 15 is a view illustrating a configuration of an initiator according to a fourth embodiment.
FIG. 16 is a cross-sectional view of the initiator taken along line B-B in FIG. 15.
FIG. 17 is a view for describing a manufacturing procedure (assembly procedure) of the initiator according to the fourth embodiment.
FIG. 18 is a view for describing a situation corresponding to a pressure-filling process.
FIG. 19 is a view for describing a situation corresponding to the electrode unit fitting process.
FIG. 20 is a view illustrating a configuration of the initiator according to the fourth embodiment.
FIG. 21 is a cross-sectional view of the initiator taken along line C-C in FIG. 20.
FIG. 22 is a view for describing a manufacturing procedure (assembly procedure) of an initiator according to a fifth embodiment.
FIG. 23 is a view for describing a situation corresponding to an inner tubular portion addition process.
FIG. 24 is a view for describing a situation corresponding to the explosive filling process.
FIG. 25 is a view illustrating a configuration of an initiator according to a sixth embodiment.
FIG. 26 is a cross-sectional view of the initiator taken along line D-D in FIG. 25.
FIG. 27 is a view illustrating a configuration of an initiator according to a seventh embodiment.
FIG. 28 is a cross-sectional view of the initiator taken along line E-E in FIG. 27.
FIG. 29 is a view illustrating a configuration of the initiator according to the seventh embodiment.

### Description of Embodiments

Initiators and initiator devices according to embodiments of the present disclosure will be hereinafter described with reference to the drawings. Note that the respective configurations and the combinations thereof in the respective embodiments are merely examples, and additions, omissions, substitutions, and other changes to the configurations can be made as appropriate without departing from the gist of the present invention. The present disclosure is not limited by the embodiments and is limited only by the claims.

### First Embodiment

### Overall Configuration

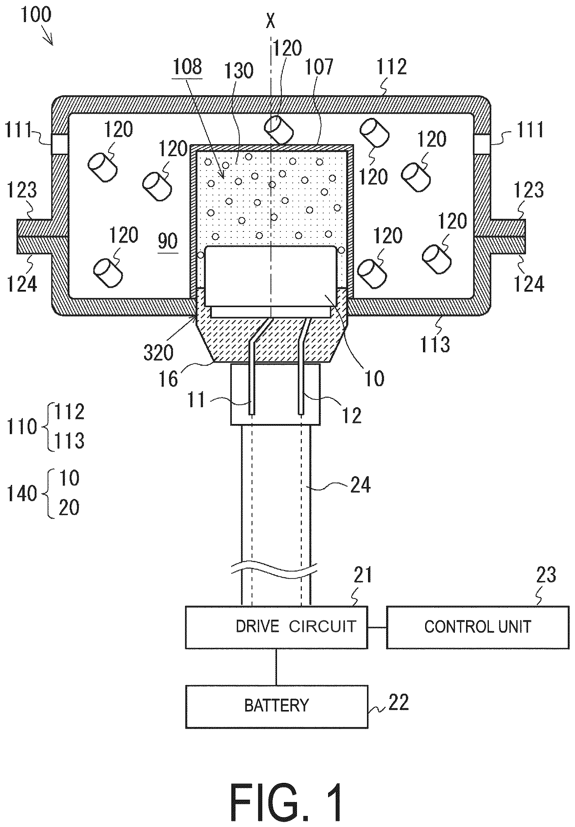

FIG. 1 is a view illustrating a configuration of a gas generator 100 including an initiator 10 according to a first embodiment. FIG. 1 illustrates a state of the gas generator 100 before actuation. The gas generator 100 is, for example, a gas generator for an airbag, the gas generator supplying the airbag with gas for inflating and deploying the airbag. Note that the gas generator 100 is not limited to a gas generator for an automobile, and may be a gas generator for supplying gas to an airbag for a motorcycle, a bicycle, a pedestrian, or the like, or for supplying gas to a life jacket.

As illustrated in FIG. 1, the gas generator 100 includes a housing 110, a gas generating agent 120, a transfer charge 130, an initiator device 140, and the like. The initiator device 140 includes the initiator 10 and a power supply unit 20 that supplies power to the initiator 10 for actuation. The gas generator 100 is configured to burn the gas generating agent 120 by actuating the initiator device 140, and discharge combustion gas as a combustion product from a gas discharge port 111 formed in the housing 110. Hereinafter, each configuration of the gas generator 100 will be described.

### Housing

The housing 110 is a metal outer shell container for accommodating each part constituting the gas generator 100, and includes an upper container 112 and a lower container 113. The upper container 112 and the lower container 113 are each formed into a substantially cylindrical shape having a bottom, and the housing 110 is formed as a short cylindrical outer shell container in which both ends in a center axis X direction are closed by joining the upper container 112 and the lower container 113 with their opening ends facing each other. The upper container 112 and the lower container 113 can each be formed by, for example, pressing a stainless steel plate.

Inside the housing 110, the initiator 10, a cup body 107, the transfer charge 130, the gas generating agent 120, and the like are disposed. A combustion chamber 90 is formed inside the housing 110, and the gas generating agent 120 is accommodated in the combustion chamber 90. Here, in a direction along the center axis X direction of the housing 110, the upper container 112 side (that is, upper side in FIG. 1) is defined as an upper side of the gas generator 100, and the lower container 113 side (that is, lower side in FIG. 1) is defined as a lower side of the gas generator 100.

An attachment hole 320 for attaching the initiator 10 to the lower container 113 is formed at a center of the bottom plate portion of the lower container 113. The initiator 10 is inserted into this attachment hole 320 and attached to the lower container 113 via a resin-made holding portion 16, and the initiator 10 is disposed coaxially with the housing 110.

A joining portion 123 of the upper container 112 and a joining portion 124 of the lower container 113 are each formed in a flange shape, placed on one another, and joined by laser welding or the like. The housing 110 is formed by the upper container 112 and the lower container 113 thus joined, and defines an internal space. In an upper circumferential wall portion of the upper container 112, a plurality of the gas discharge ports 111 enabling communication between the internal space and an external space of the housing 110 are formed in line along a circumferential direction.

### Cup Body

As illustrated in FIG. 1, the cup body 107 is a member mounted onto the resin-made holding portion 16 and has a bottomed tubular shape. More specifically, as to the cup body 107, a top wall portion 71 having a circular shape in plan view and a side wall portion 72 having a cylindrical shape extending downward from the top wall portion 71 toward a bottom plate portion 32 are integrally formed. The cup body 107 is disposed covering the initiator 10 together with a space therearound, and an internal space thereof is a transfer chamber 108. The transfer chamber 108 is filled with the transfer charge 130 such that the transfer charge 130 is brought in contact with the initiator 10 and the periphery of the initiator 10 is filled with the transfer charge 130.

The transfer charge 130 accommodated in the transfer chamber 108 is not particularly limited, but a gas generating agent having excellent ignitability and a higher combustion temperature than that of the gas generating agent 120 is preferably used. As the transfer charge 130, a known charge composed of, for example, nitroguanidine (34 wt%) and strontium nitrate (56 wt%) can be used. Alternatively, a known black gunpowder (boron saltpeter) or the like may be used as the transfer charge 130. The form of the transfer charge 130 is not particularly limited and may be powder form. Otherwise, the transfer charge 130 may be formed into any of various shapes such as, for example, a granular shape, a pellet shape, a cylindrical shape, or a disk shape, using a binder or the like. The transfer charge 130 is ignited by the combustion products released when the initiator 10 is actuated, and generates combustion gas.

Further, the cup body 107 partitions the transfer chamber 108 on the inside and the combustion chamber 90 on the outside. That is, inside the housing 1, the outside of the cup body 107 is the combustion chamber 90. When the transfer charge 130 in the transfer chamber 108 is ignited and burned by actuation of the initiator 10, the cup body 107 is configured to rupture and thus make the combustion chamber 90 be in communication with the transfer chamber 108. The cup body 107 may be, for example, a thin aluminum cup body. However, the material of the cup body 107 is not particularly limited, and various materials can be used.

### Initiator

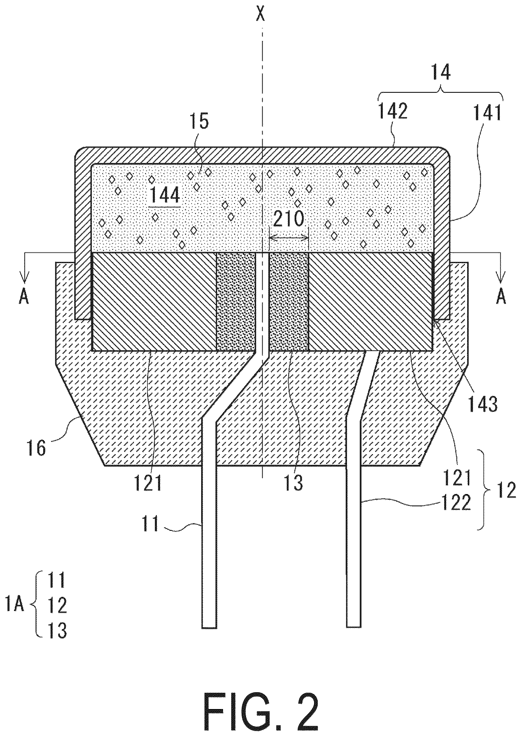

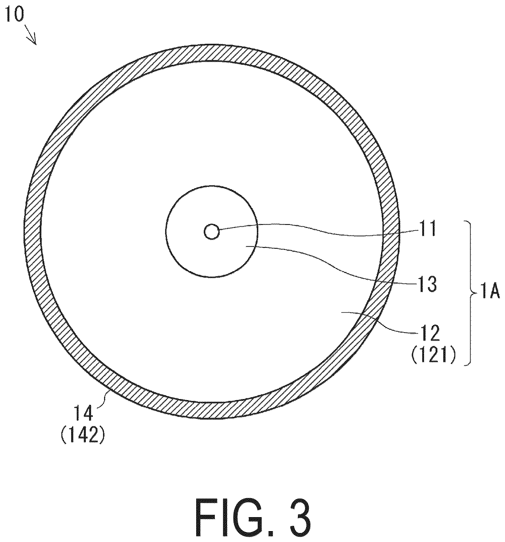

FIG. 2 is an axial cross-sectional view schematically illustrating an internal structure of the initiator 10 according to the first embodiment, along the center axis X thereof, and FIG. 3 is a cross-sectional view of the initiator 10 taken along line A-A in FIG. 2. Hereinafter, as illustrated in FIG. 2, a cross section obtained by cutting the initiator 10 along the center axis X may be referred to as a "longitudinal section" of the initiator 10. A direction along the center axis X of the initiator 10 may be referred to as an "up-and-down direction" of the initiator 10. FIG. 2 illustrates a state of the initiator 10 before actuation.

The initiator 10 is provided with a pair of electrodes 11, 12, an insulating member 13 interposed between the electrodes, a cover body 14 covering one end side of each of the electrodes 11, 12 together with a space therearound, an explosive 15 accommodated in this space in the cover body, and the resin-made holding portion 16 covering a bottom portion side of the initiator 10. Note that one of the pair of electrodes 11, 12 is also referred to as the first electrode 11, and the other is also referred to as the second electrode 12.

The first electrode 11 is a linear member (electro-conductive pin) formed of a metal or the like and having conductivity, and a distal end portion thereof is disposed at the center of the initiator 10 along the X-axis. The second electrode 12 includes a metal ring 121 including a through hole 129 at the center of the disk through which the first electrode 11 passes, and an electro-conductive pin 122 connected to this metal ring 121. The electrode among the electrodes 11, 12 being a positive electrode or a negative electrode is not particularly limited. However, in the present embodiment, the first electrode 11 is a positive electrode and the second electrode 12 is a negative electrode.

The insulating member 13 is provided between the first electrode 11 inserted into the through hole 129 of the metal ring 121 and an inner circumferential surface of the metal ring 121. The insulating member 13 is an insulating member made of a glass, ceramic, or the like, and is interposed between the first electrode 11 and the second electrode 12, thereby increasing a dielectric strength between the electrodes to a predetermined value or greater, such as, for example, an air gap or greater. When the initiator 10 is manufactured, the first electrode 11 and the second electrode 12 are integrated with each other with the insulating member 13 interposed therebetween to form an electrode unit 1A.

The cover body 14 is a bottomed tubular member and, in the present embodiment, includes a circumferential wall 141 having a cylindrical shape, a top wall portion 142 that closes an upper end of this circumferential wall 141, and an opening 143 at a lower end of the circumferential wall 141. The cover body 14 is placed over the electrode unit 1A, covering a distal end side of the electrode unit 1A, and a lower portion of the circumferential wall 141 is attached to the metal ring 121 by welding or the like. That is, the electrode unit 1A plugs the opening 143 of the cover body 14. The space inside the cover body 14 that is thus closed by the electrode unit 1A serves as an explosive accommodation portion 144.

The explosive accommodation portion 144 of the cover body 14 is filled with the explosive 15. As the explosive 15, for example, zirconium-potassium perchlorate (ZPP), zirconium-tungsten-potassium perchlorate (ZWPP), titanium hydride-potassium perchlorate (THPP), lead tricinate, or the like may be adopted.

The resin-made holding portion 16 is molded in a lower portion of the cover body 14, covering a distal end portion of the electrode unit 1A from the lower side. When attached to the lower container 113 of the gas generator 100, the resin-made holding portion 16 fixedly holds the initiator 10 to the housing 110. The resin-made holding portion 16 is an insulating member and ensures dielectric strength between the electrodes 11, 12. Note that the resin-made holding portion 16 is not limited to being molded, and may be formed separately from the cover body 14 and the electrode unit 1A, and subsequently attached to the cover body 14 and the electrode unit 1A.

In the initiator 10, an upper end portion 21A of the metal ring 121 provided in the second electrode 12 and an upper end portion 11A of the first electrode 11 face the inside of the explosive accommodation portion 144, and the upper end portion 11A of the first electrode 11 and the upper end portion 21A of the metal ring 121 are disposed at a predetermined interval 210. In this interval 210, a dielectric strength is set to be low as compared with that of a portion where the insulating member 13 is interposed and a portion where the resin-made holding portion 16 is interposed between the electrodes 11, 12, and the interval 210 serves as a discharge gap in which discharge occurs when actuation power is supplied between the electrodes 11, 12.

### Power Supply Unit

The power supply unit 20 includes a drive unit 21, a battery 22, and a control unit 23. The drive unit 21 is electrically connected to the electrodes 11, 12 via a cable 24, and is also connected to the battery 22 via a power supply line. Further, the drive unit 21 is connected to the control unit 23 via a communication line. The drive unit 21 boosts the power supplied from the battery 22 and applies a high voltage between the electrodes 11, 12 in accordance with the control of the control unit 23. The drive unit 21 may be, for example, an impulse voltage generation circuit or a step-up DC-DC converter.

The control unit 23 determines whether the gas generator 100 is to be operated on the basis of a signal acquired from an impact sensor or an operation unit, and controls the drive unit 21, applying a high voltage between the electrodes 11, 12, when the gas generator 100 is operated. Here, the high voltage is a voltage that exceeds a withstand voltage in the discharge gap 210 between the electrodes 11, 12 and causes discharge accompanied by a spark, a so-called spark discharge or arc discharge.

### Manufacturing Method

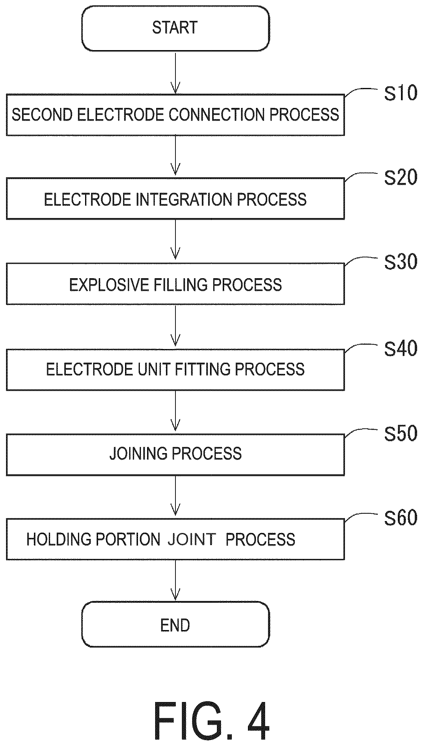

Next, a manufacturing method (assembly method) of the initiator 10 will be described. However, the manufacturing method (assembly method) of the initiator 10 according to the present embodiment is not limited to the following method. FIG. 4 is a view for describing a manufacturing procedure (assembly procedure) of the initiator 10 according to the first embodiment.

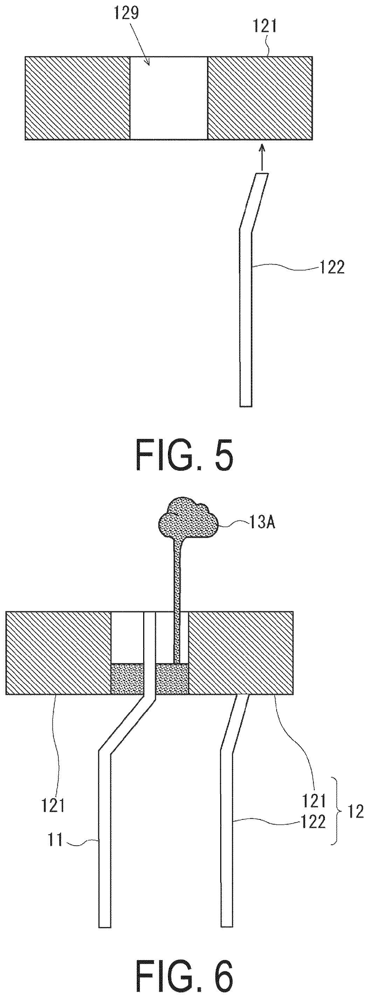

First, in step S10, the electro-conductive pin 122 is connected to a lower surface of the metal ring 121 to create the second electrode 12 (second electrode connection process). FIG. 5 is a view for describing a situation corresponding to the second electrode connection process. FIG. 5 illustrates a state in which the electro-conductive pin 122 is brought close to a lower surface 121A of the metal ring 121 of the second electrode 12 from below.

In step S20, a distal end portion of the first electrode 11 is passed through the through hole 129 of the metal ring 121, an area between the electrode 11 and an inner circumferential surface of the metal ring 121 is filled with a material of the insulating member 13, and the insulating member 13 is burned, integrating the electrodes 11, 12, thereby forming the electrode unit 1A (electrode integration process). FIG. 6 is a view for describing a situation corresponding to the electrode integration process. FIG. 6 illustrates a state in which the area between the first electrode 11 and the second electrode 12 is filled with a material 13A of the insulating member 13.

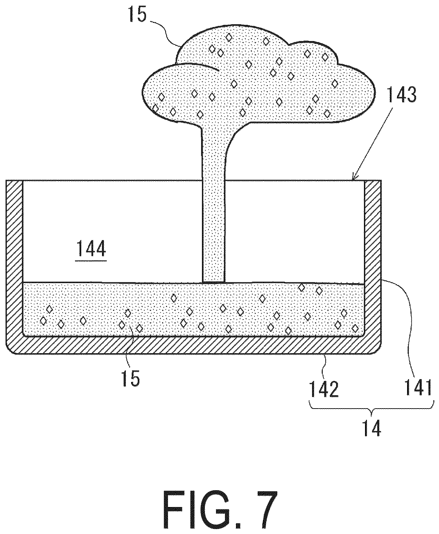

In step S30, the explosive accommodation portion 144 is filled with the explosive 15 from the opening 143 of the cover body 14 (explosive filling process). At this time, by applying pressure to the explosive 15 for filling (hereinafter, also referred to as pressure-filling), it is possible to reduce gaps existing between particles of the explosive 15 and increase the density of the explosive 15. However, when the gaps are excessively reduced, the space in which discharge can occur is reduced, and discharge may not readily occur in the discharge gap 210 in contact with the explosive 15. Therefore, when the explosive accommodation portion 144 is filled with the explosive 15, desirably pressure is not applied or is suppressed to a low level, facilitating discharge. FIG. 7 is a view for describing the situation corresponding to the explosive filling process. FIG. 7 illustrates a state in which the explosive accommodation portion 144 of the cover body 14 is filled with the explosive 15.

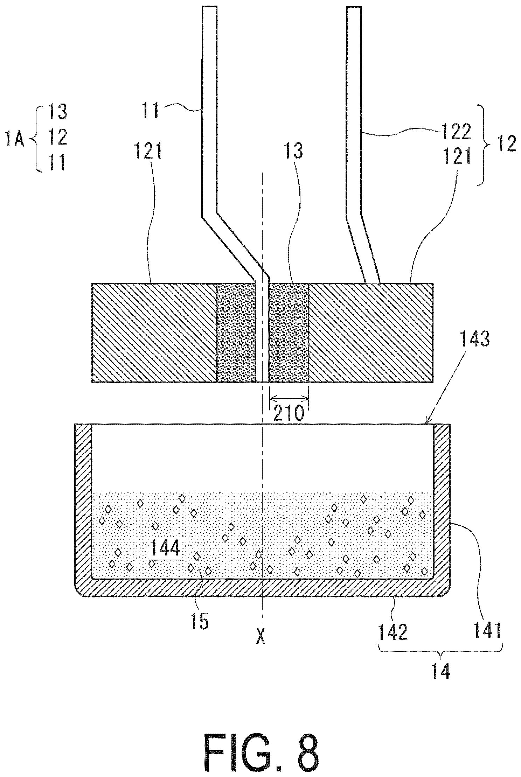

In step S40, the electrode unit 1A is fitted into the opening 143 such that the discharge gap 210 formed at the distal end portion of the electrode unit 1A is brought into contact with the explosive 15 with which the cover body 14 is filled (electrode unit fitting process). FIG. 8 is a view for describing a situation corresponding to the electrode unit fitting process. FIG. 8 illustrates a state in which the electrode unit 1A is brought close from the opening 143 side of the cover body 14.

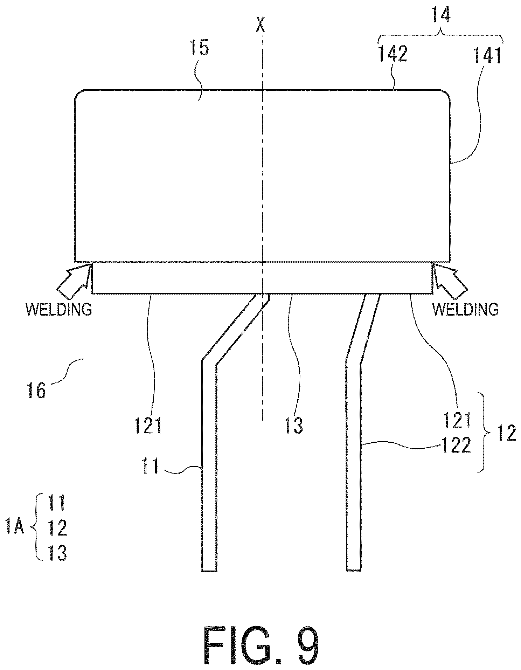

In step S50, the metal ring 121 of the electrode unit 1A assembled to the cover body 14 and a lower end portion of the cover body 14 are welded, joining the electrode unit 1A and the cover body 14 (joining process). FIG. 9 is a view for describing a situation corresponding to the joining process. FIG. 9 illustrates a state in which the metal ring 121 and the lower end portion of the cover body 14 are welded to each other to complete the joining.

In step S60, as illustrated in FIG. 2, the resin-made holding portion 16 is molded at the lower portion of the cover body 14, covering the distal end portion of the electrode unit 1A from below (holding portion formation process).

### Operation

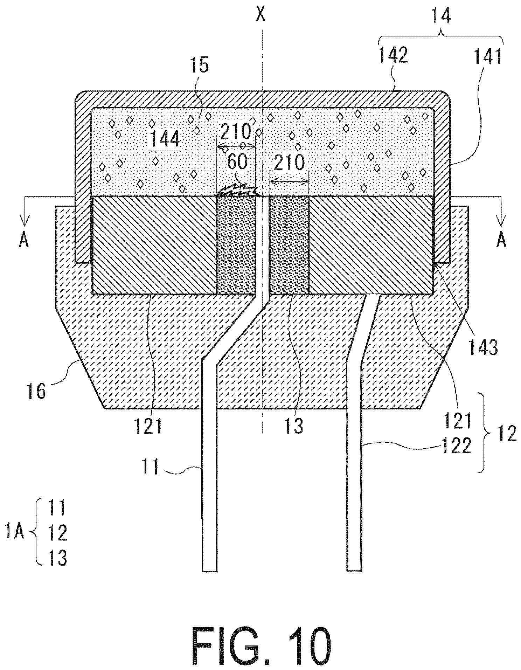

The operation of the gas generator 100 according to the first embodiment manufactured as described above will now be described. When an impact sensor (not illustrated) in an airbag device detects an impact caused by a collision of a vehicle or the like and the control unit 23 acquires a detection signal thereof, for example, the control unit 23 controls the drive unit 21, applying an actuation voltage to the pair of electrodes 11, 12 and actuates the initiator 10. FIG. 10 is a view illustrating a state in which a high voltage for actuation is applied between the electrodes 11, 12. As illustrated in FIG. 10, when a high voltage is applied between the electrodes 11, 12, a discharge accompanied by a spark 60 is generated in the discharge gap 210 between the electrode distal end portions facing the explosive accommodation portion 144, and the explosive 15 in the explosive accommodation portion 144 is ignited by this spark 60, burning the explosive 15. Then, the internal pressure of the cover body 14 rises with the combustion of the explosive 15 and the cover body 14 ruptures, whereby combustion products such as flame, high-temperature gas, and the like are released from the ruptured location of the cover body 14. As illustrated in FIG. 1, the initiator 10 is disposed facing the transfer chamber 108 formed inside the cup body 107 and thus the transfer charge 130 is ignited and burned by the flame, the high-temperature gas, and the like released from the ruptured location of the cover body 14. That is, the initiator 10 of the present embodiment functions as an igniter that ignites the transfer charge 130 by actuation.

When the transfer charge 130 accommodated in the transfer chamber 108 surrounded by the top wall portion 71 and the side wall portion 72 of the cup body 107 burns, the temperature and internal pressure in the transfer chamber 108 rapidly rise due to the flame and the high-temperature gas generated by this combustion, and the energy causes the cup body 107 having a thin wall made of aluminum to rupture. As a result, the combustion products (flame and high-temperature gas) generated by the combustion of the transfer charge 130 are released from the transfer chamber 108 to the combustion chamber 90. The combustion product come into contact with the gas generating agent 120 accommodated in the combustion chamber 90, igniting and burning the gas generating agent 120.

The high-temperature, high-pressure combustion gas generated by the combustion of the gas generating agent 120 in the combustion chamber 90 is released from the gas discharge ports 111 to outside of the housing 110, introduced into the airbag (not illustrated) in the airbag device, and utilized to inflate and deploy the airbag.

### Effects of Embodiment

According to the present embodiment, as described above, the initiator 10 includes the pair of electrodes 11, 12, the cover body 14 covering one end side of each of the electrodes 11, 12 together with the space therearound, and the explosive 15 accommodated in the explosive accommodation portion 144 in the cover body 14, and the discharge gap is provided between the electrodes 11, 12 in the explosive accommodation portion 144. As a result, the initiator 10 of the present embodiment does not require a bridge wire as compared with the initiator in the related art in which a bridge wire is provided between electrodes, making it possible to adopt a simple configuration with a smaller number of components, facilitating size reduction. Further, with a bridge wire not being used, the process of welding the bridge wire and the process of inspecting the state of the bridge wire can be omitted. Further, with a bridge wire not being used, breakage of the bridge wire due to pressure contact with the explosive, connection failure of the bridge wire, or the like during manufacture does not occur, making it possible to prevent a reduction in yield and stabilize quality. With such a simple configuration, the number of processes at the time of manufacture can be reduced and a decrease in yield can be prevented, making it possible to facilitate the manufacture of the initiator 10. As a result, the manufacturing cost of the initiator 10 can be reduced.

### Second Embodiment

The first embodiment described above illustrates an example in which, as the power supply unit 20, the drive unit 21 boosts the voltage of the power supplied from the battery 22. However, the present embodiment illustrates an example of a power supply unit 20A that uses a piezoelectric element. Note that other configurations are the same as those of the first embodiment described above, and thus common elements are denoted by common reference signs or the like, and detailed description thereof will be omitted.

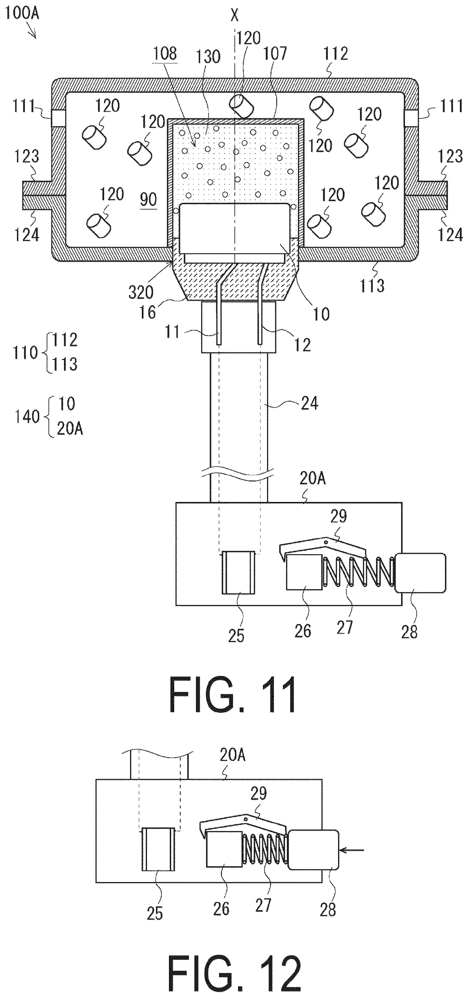

FIG. 11 is a view illustrating a configuration of a gas generator 100A according to a second embodiment. The power supply unit 20A includes a piezoelectric element 25, a hammer 26, an elastic body 27, a push button 28, and a locking portion 29. The piezoelectric element 25 includes, for example, a piezoelectric body and electrodes sandwiching the piezoelectric body, and converts a force applied to the piezoelectric body into a voltage. The piezoelectric body and the electrodes may be stacked, making it possible to achieve a voltage that causes a discharge in the discharge gap 210. The piezoelectric element 25 is connected to the electrodes 11, 12 via the cable 24.

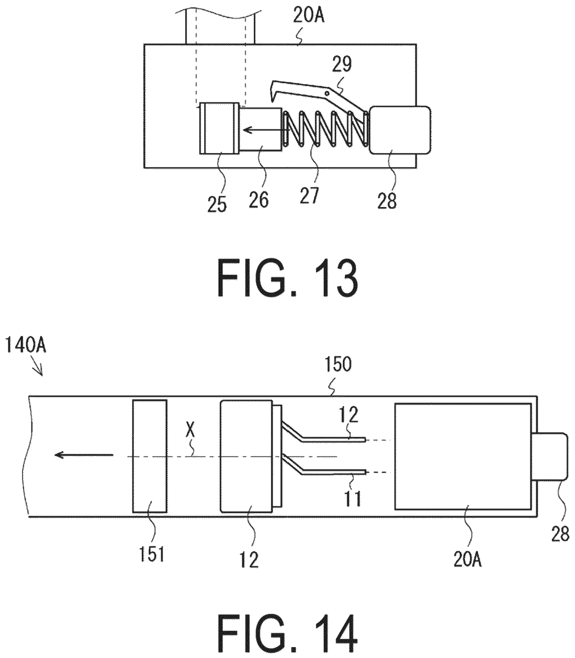

The hammer 26 is held by a holding mechanism (not illustrated) and is movable forward and backward with respect to the piezoelectric element 25 and, in an initial state, is locked by the locking portion 29 at a position (initial position) away from the piezoelectric element 25. The elastic body 27 is, for example, a coil spring and, when the push button 28 is pressed by a user or the like, is compressed, urging the hammer 26 toward the piezoelectric element. FIG. 12 is a view illustrating a state in which the push button 28 is pressed to a position just in front of the locking portion 29. Then, when the push button 28 is further pressed and abuts against the locking portion 29, the locking portion 29 is rotated, unlocking the hammer 26. As a result, the hammer 26 moves toward the piezoelectric element 25 by the urging force of the elastic body 27 and collides with the piezoelectric element 25. FIG. 13 is a view illustrating a state of the hammer 26 collided with the piezoelectric element 25.

The piezoelectric element 25 converts the force applied by the collision of the hammer 26 into a voltage and applies the voltage between the electrodes 11, 12 via the cable 24. As a result, discharge is generated in the discharge gap 210 of the initiator 10, actuating the initiator 10.

Thus, in the present embodiment, the initiator 10 is configured to ignite the explosive 15 by discharge as in the first embodiment described above, facilitating the manufacture of the initiator 10. Further, according to the present embodiment, the voltage applied to the electrodes 11, 12 of the initiator 10 is generated by the piezoelectric element 25, making it possible to eliminate the need for a battery and provide an initiator device having a simple configuration.

### Third Embodiment

In the first embodiment described above, the initiator 10 is used as an igniter that ignites the transfer charge 130 by actuation. However, the present embodiment illustrates an example in which the initiator 10 is used as an actuator that moves an operation target by pressure when the initiator 10 is actuated. Note that, in the present embodiment, elements common to those of the first embodiment described above are denoted by the same reference signs or the like and description thereof will be omitted.

FIG. 14 is a view illustrating a configuration of an initiator device 140A according to a third embodiment. The initiator device 140A includes an enclosure 150 having a tubular shape, an operation target 151, the initiator 10, and the power supply unit 20A. Note that the initiator 10 and the power supply unit 20A are the same as those in the second embodiment described above.

The enclosure 150 is a tubular member extending in one direction, and the operation target 151, the initiator 10, and the power supply unit 20A are provided in this tube. The initiator 10 is disposed with a center axis of the enclosure 150 in the extending direction coinciding with the X-axis illustrated in FIG. 2.

In the initiator device 140A of the present embodiment, when the push button 28 is pressed, a high voltage is applied between the electrodes 11, 12 of the initiator 10 by the piezoelectric element 25 of the power supply unit 20A. As a result, a discharge accompanied by the spark 60 is generated in the discharge gap 210 between the electrode distal end portions facing the explosive accommodation portion 144 of the initiator 10, and the explosive 15 in the explosive accommodation portion 144 is ignited by this spark 60, burning the explosive 15. Then, the internal pressure of the cover body 14 rises with the combustion of the explosive 15 and the cover body 14 ruptures, whereby combustion products such as flame, high-temperature gas, and the like are released from the ruptured location of the cover body 14. The operation target 151 is moved in the extending direction of the enclosure 150 by the pressure when the combustion products are released. Note that the gas generating agent may be further provided in a space between the operation target 151 and the initiator 10, the gas generating agent may be burned by the combustion set released by actuation of the initiator 10, and the operation target 151 may be operated by the pressure of the gas generated by the combustion of the gas generating agent.

Thus, according to the present embodiment, the operation target can be instantaneously moved with a relatively large force by the combustion of the explosive 15. Further, with the initiator device 140A of the present embodiment, it is possible to eliminate the need for a battery as in the second embodiment described above and provide an initiator device having a simple configuration.

The operation target 151 of the present embodiment is not particularly limited, but may be, for example, a plunger of a needleless syringe. That is, the initiator 10 may be used as an actuator of a needleless injector. In this case, for example, the plunger of the needleless syringe accommodating an injection liquid is moved by the pressure of the combustion products released by actuation of the initiator 10, and an injection liquid is ejected to the outside by the pressing of this plunger.

### Fourth Embodiment

In the first embodiment described above, the initiator 10 is formed such that the explosive 15 with which the explosive accommodation portion 144 is filled and the discharge gap 210 are brought into contact with each other. However, the present embodiment illustrates an example in which a void is provided between the explosive 15 and the discharge gap 210. Note that other configurations are the same as those of the first embodiment described above. Further, other configurations may be formed as in the second embodiment or the third embodiment. In the present embodiment, elements common to those of the embodiments described above are denoted by the same reference signs or the like and description thereof will be omitted.

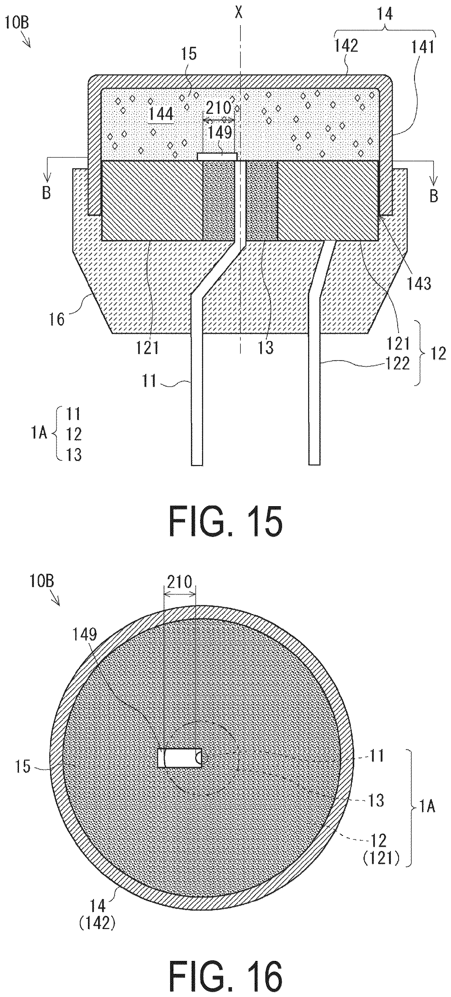

FIG. 15 is a view illustrating a configuration of an initiator 10B according to the fourth embodiment, and FIG. 16 is a cross-sectional view of the initiator 10B taken along line B-B in FIG. 15. As illustrated in FIG. 15 and FIG. 16, a void 149 is provided between the explosive 15 with which the explosive accommodation portion 144 is filled and the discharge gap 210, and the explosive 15 and the discharge gap 210 are disposed close to each other, within a predetermined distance from each other. Here, the predetermined distance is a maximum value of a distance at which the explosive 15 can be ignited by the discharge generated in the discharge gap 210. The predetermined distance can be obtained by, for example, changing the distance between the explosive 15 and the discharge gap 210 and testing whether ignition can be performed. The predetermined distance may be determined according to conditions such as the voltage value applied to the electrodes 11, 12 and the type of the explosive 15.

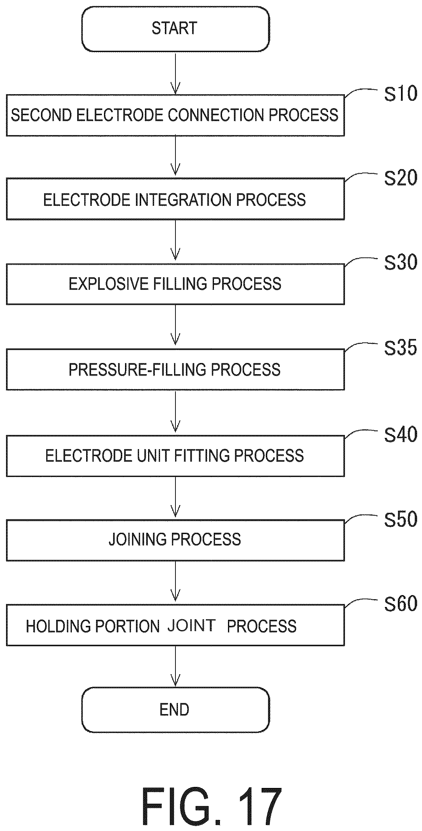

FIG. 17 is a view for describing a manufacturing procedure (assembly procedure) of the initiator 10B according to the fourth embodiment. Note that the processes of steps S10 to S20 are the same as those in FIG. 4 in the first embodiment.

In step S30, the explosive accommodation portion 144 is filled with the explosive 15 to a predetermined amount from the opening 143 of the cover body 14 (explosive filling process). Note that, in the present embodiment, the bulk of the explosive 15 is packed by pressure-filling in the next step, and thus the filling amount may be set to that equivalent to the explosive 15 reaching a required state after pressure-filling. For example, the filling amount may be that equivalent to a bottom surface of the explosive 15 being at a specified position.

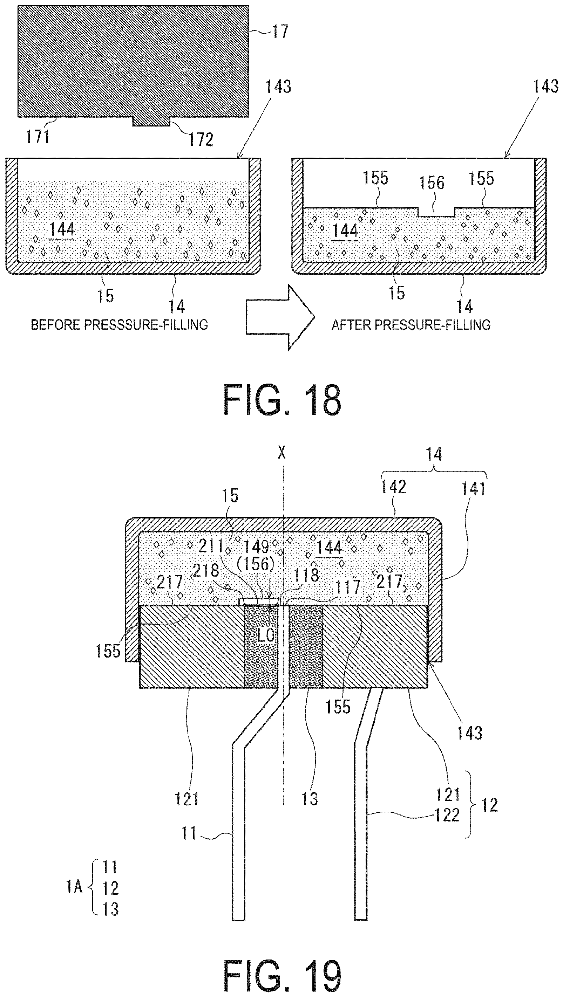

In step S35, a pressing die 17 is inserted from the opening 143, pressure is applied to the explosive 15, and the explosive 15 is pressed and compacted (pressure-filling process). FIG. 18 is a view for describing a situation corresponding to the pressure-filling process. FIG. 18 illustrates a state of pressure-filling in which a distal end of the pressing die 17 is directed downward and brought close to the opening 143 of the cover body 14 in order to insert the pressing die 17 into the explosive accommodation portion 144, and a state of the explosive 15 after pressure-filling.

The pressing die 17 has an outer shape in plan view that is circular as with the explosive accommodation portion 144, has an outer diameter formed slightly smaller than an inner diameter of the explosive accommodation portion 144, and is insertable into and removable from the explosive accommodation portion 144. Further, the pressing die 17 includes a flat surface 171 orthogonal to the X axis and a protruding portion 172 protruding from the flat surface 171 on a side (distal end side) that comes into contact with the explosive 15. Therefore, the explosive 15 subjected to pressure-filling by the pressing die 17 is pressed and compacted along the flat surface 171 and the protruding portion 172 of the pressing die 17, forming a lower end surface 155 orthogonal to the X-axis and a recessed portion 156 recessed upward with respect to the lower end surface 155.

In step S40, the electrode unit 1A is fitted into the opening 143 such that a distal end surface of the electrode unit 1A abuts against the lower end surface 155 of the explosive 15 with which the cover body 14 is pressure-filled and the discharge gap 210 and the recessed portion 156 of the explosive 15 are adjacent to each other (electrode unit fitting step). FIG. 19 is a view for describing a situation corresponding to the electrode unit fitting step. FIG. 19 illustrates a state after the electrode unit 1A is fitted into the opening 143 of the cover body 14. As illustrated in FIG. 19, with the recessed portion 156 being formed in the lower surface of the explosive 15, a void is formed between the discharge gap 210 and the explosive 15 with the distal end surface of the electrode unit 1A being in contact with the lower end surface 155 of the explosive 15. Further, a shape of the recessed portion 156 is set, positioning the explosive 15 and the discharge gap 210 within a predetermined distance in this state. For example, in the longitudinal section illustrated in FIG. 19, given a shortest discharge gap 211 as a line connecting a point 118 of the first electrode 11 on a surface 117 (hereinafter also simply referred to as upper surface) of the first electrode 11 exposed within the explosive accommodation portion 144 without being covered by the insulating member 13, the point 118 being closest to the second electrode, and a point 218 of the second electrode 12 on a surface 217 exposed within the explosive accommodation portion 144 without being covered by the insulating member 13, the point 218 being closest to the first electrode 11, a distance L0 in a direction orthogonal to this shortest discharge gap 211 may be set to be within a predetermined distance. Then, the joining process in step S50 and the holding portion formation process in step S60 are performed as in FIG. 4 described above, forming the initiator 10B.

According to the present embodiment, as illustrated in FIG. 19, the recessed portion 156 of the explosive 15 is formed on the discharge gap and the void 149 is included between the discharge gap 210 and the explosive 15, making it possible to secure a region capable of discharge even in a state in which the explosive 15 is pressed and compacted, and accurately perform the discharge to ignite the explosive 15, thus improving the reliability of the initiator 10B.

### Fifth Embodiment

In the first embodiment described above, in the initiator 10, the cover body 14 is directly filled with the explosive 15. However, an initiator 10C of the present embodiment includes an inner tubular portion 18 in the explosive accommodation portion 144, and an internal space of the inner tubular portion 18 is filled with the explosive 15. Note that other configurations are the same as those of the first embodiment described above. Further, other configurations may be formed as in the second to fourth embodiments. In the present embodiment, elements common to those of the embodiments described above are denoted by the same reference signs or the like and description thereof will be omitted.

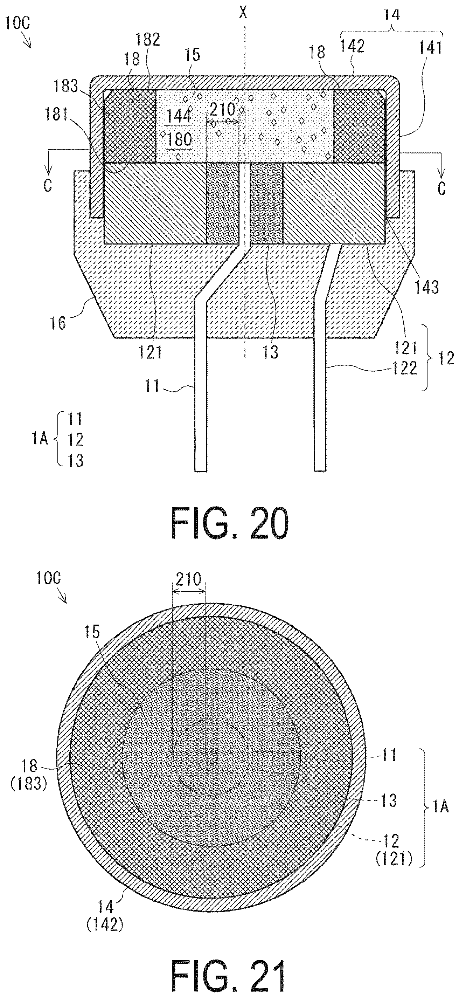

FIG. 20 is a view illustrating a configuration of the initiator 10C according to the fourth embodiment, and FIG. 21 is a cross-sectional view of the initiator 10C taken along line C-C in FIG. 20. The inner tubular portion 18 is a member having a tubular shape extending in one direction (X-axis direction) and including an internal space 180 opened at both end portions 181, 182. The material of the inner tubular portion 18 is not necessarily limited, but is formed of metal in the present embodiment.

The inner tubular portion 18 is a member having a cylindrical shape, is disposed in the explosive accommodation portion 144 of the cover body 14, and is filled with the explosive 15 in the internal space 180. That is, in the present embodiment, the explosive accommodation portion 144, specifically the internal space 180, is filled with the explosive 15. When viewed in the extending direction, such as, for example, when viewed from the upper end portion 182 side as illustrated in FIG. 21, the inner tubular portion 18 is disposed with a circumferential wall 183 forming a circular shape with a center thereof being coaxial with the X-axis, and a lower end of the inner tubular portion 18 abuts against the metal ring 121. In other words, the inner tubular portion 18 is disposed with an opening on the lower end portion 181 side facing an upper end portion of the first electrode 11.

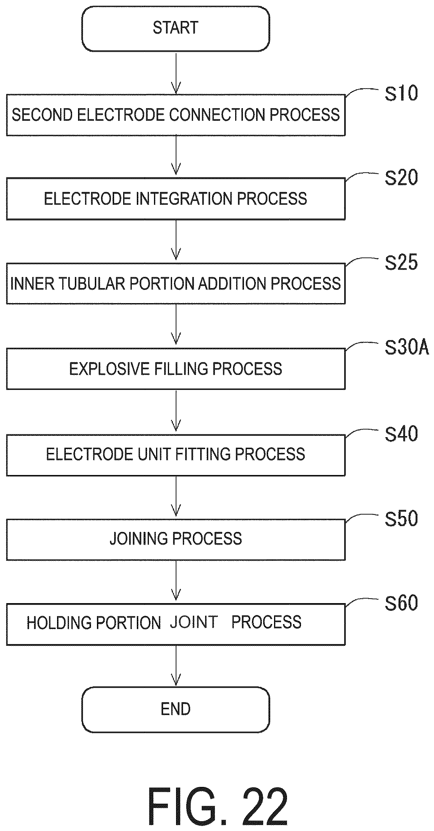

FIG. 22 is a view for describing a manufacturing procedure (assembly procedure) of the initiator 10C according to a fifth embodiment. Note that the processes of steps S10 to S20 are the same as those in FIG. 4 in the first embodiment.

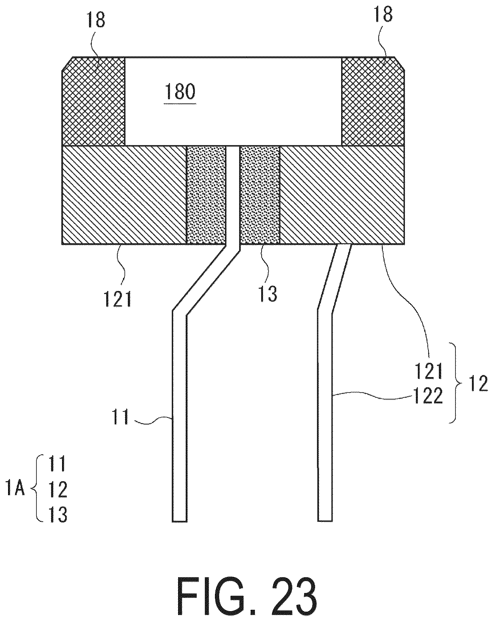

In step S25, the inner tubular portion 18 is placed on an upper surface of the metal ring 121, and the upper surface of the metal ring 121 and the lower end of the inner tubular portion 18 are welded to each other, thereby adding the inner tubular portion 18 to the second electrode 12 (inner tubular portion addition process). FIG. 23 is a view for describing a situation corresponding to the inner tubular portion addition process. FIG. 23 illustrates a state of the electrode unit 1A with the inner tubular portion 18 added thereto.

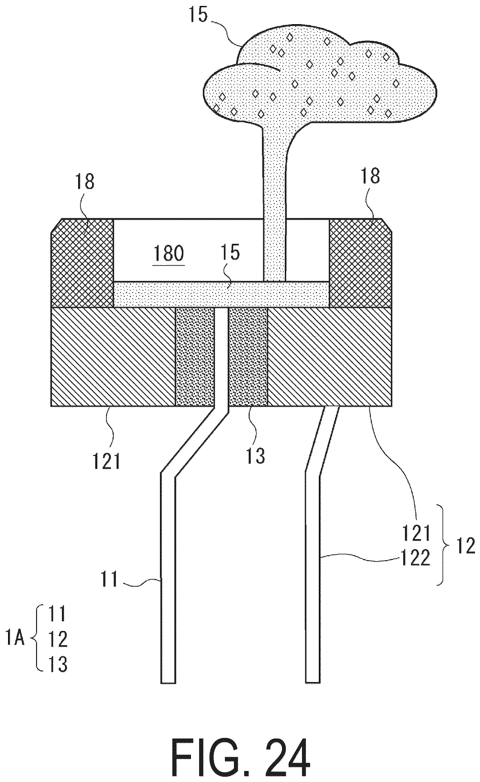

In step S30A, the explosive 15 is charged into the inner tubular portion 18 from the opening of the upper end portion 182 of the inner tubular portion 18, filling the inner tubular portion 18 with a predetermined filling amount (explosive filling process). At this time, by applying pressure to the explosive 15 for filling (hereinafter, also referred to as pressure-filling), it is possible to reduce gaps existing between particles of the explosive 15 and increase the density of the explosive 15. However, when the gaps are excessively reduced, the space in which discharge can occur is reduced, and discharge may not readily occur in the discharge gap 210 in contact with the explosive 15. Therefore, when the inner tubular portion 18 is filled with the explosive 15, desirably, pressure is not applied or is suppressed to a low level, facilitating discharge. FIG. 24 is a view for describing a situation corresponding to the explosive filling process. FIG. 24 illustrates a state in which the inner tubular portion 18 is filled with the explosive 15. Then, the joining process in step S50 and the holding portion formation process in step S60 are performed as in FIG. 4 described above, forming the initiator 10C.

According to the present embodiment, it is possible to ignite the explosive 15 in the inner tubular portion 18 by a discharge in the discharge gap 210, and facilitate the manufacture of the initiator 10 as in the embodiments described above. Note that, although the inner tubular portion 18 is not pressure-filled or is pressure-filled at a reduced pressing force with the explosive 15 in the present embodiment, the inner tubular portion 18 may be pressure-filled with the explosive 15 to form a recessed portion at the position of the discharge gap 210, thereby forming a void between the explosive 15 and the discharge gap 210 and arranging the explosive 15 and the discharge gap 210 within a predetermined distance as in the fourth embodiment.

### Sixth Embodiment

In the present embodiment, an initiator 10D includes the inner tubular portion 18 in the explosive accommodation portion 144, and adopts a configuration in which an extending portion 184 is provided from the circumferential wall 183 of the inner tubular portion 18 toward the first electrode 11, forming a discharge gap 220 between the extending portion 184 and the first electrode 11. Note that other configurations are the same as those of the fifth embodiment described above. In the present embodiment, elements common to those of the embodiments described above are denoted by the same reference signs or the like and description thereof will be omitted.

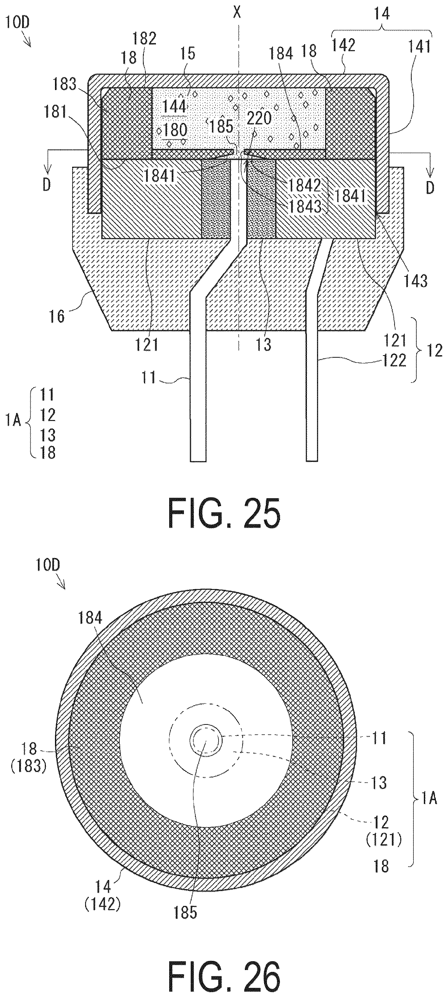

FIG. 25 is a view illustrating a configuration of the initiator 10D according to a sixth embodiment, and FIG. 26 is a cross-sectional view of the initiator 10D taken along line D-D of FIG. 25. The inner tubular portion 18 is a member having a tubular shape extending in one direction (X-axis direction) and including the internal space 180 opened at both end portions 181, 182. The inner tubular portion 18 is a member having conductivity and formed of metal or the like, and is electrically connected to the metal ring 121 to constitute part of the second electrode 12.

The inner tubular portion 18 of the present embodiment includes the extending portion 184 having an annular shape extending from the lower end portion 181 of the circumferential wall 183 on the ring portion side toward the internal space side. The extending portion 184 extends in a direction substantially orthogonal to the X-axis, and an inner end surface 1841 is disposed at a predetermined distance from the first electrode 11, facilitating discharge between the extending portion 184 and the first electrode 11. That is, the inner end surface 1841 serves as an inner circumferential wall defining an opening portion (through hole) 185 disposed in an upper portion of the first electrode. The opening portion 185 is enlarged in diameter on a lower side in the X-axis direction. That is, the inner end surface 1841 is bent and includes an upper end portion 1842 parallel to the X-axis and a lower inclined portion 1843 inclined with respect to the X-axis in a cross section along the X-axis as illustrated in FIG. 25, for example. In other words, the lower inclined portion 1843 is positioned with an inner side thereof higher than an outer side thereof in the direction orthogonal to the X-axis, and is inclined upward from the outer side to the inner side. Further, when viewed from the upper side of the X-axis as illustrated in FIG. 26, the extending portion 184 is provided with part of the inner end surface 1841 positioned above the first electrode 11.

Thus, in the present embodiment, the inner tubular portion 18 includes the extending portion 184, the inner end surface 1841 of the extending portion 184 is provided protruding above the first electrode 11, and the discharge gap 220 is formed between the inner end surface 1841 and the first electrode 11. Then, as in the fifth embodiment, the explosive 15 is charged from the upper end opening of the inner tubular portion 18 in step S30A, and the internal space 180 is filled with the explosive 15, filling the opening portion 185 and, for example, the area between the inner end surface 1841 and the first electrode 11, with the explosive 15 as well. Thus, in the initiator 10D of the present embodiment, when the actuation voltage is applied between the electrodes 11, 12, the explosive 15 with which the discharge gap 220 is filled is ignited by the discharge generated in the discharge gap 220, making it possible to achieve accurate actuation and improve reliability.

### Seventh Embodiment

In the sixth embodiment described above, the inner tubular portion 18 is configured to include the extending portion 184 having an annular shape. However, in the present embodiment, the inner tubular portion 18 includes an extending portion 184A having an arm shape. Note that other configurations are the same as those of the sixth embodiment described above. In the present embodiment, elements common to those of the embodiments described above are denoted by the same reference signs or the like and description thereof will be omitted.

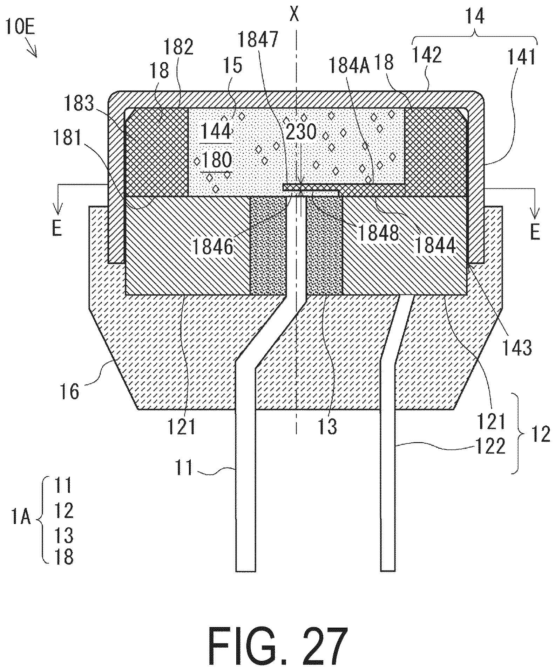

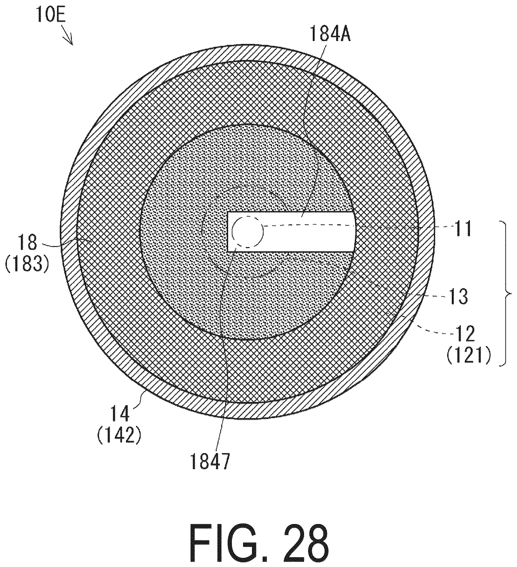

FIG. 27 is a view illustrating a configuration of an initiator 10E according to a seventh embodiment, and FIG. 28 is a cross-sectional view of the initiator 10E taken along line E-E of FIG. 27. The inner tubular portion 18 of the present embodiment includes an extending portion 184A having an arm shape with a portion of the circumferential wall 183 extending to the internal space side at the lower end portion 181 of the ring portion side of the circumferential wall 183. The extending portion 184A is extended in a direction substantially orthogonal to the X-axis, and a portion (hereinafter, also referred to as an inner end side portion) 1847 within a predetermined range from a distal end thereof toward the circumferential wall side is provided overlapping the first electrode 11 when viewed from the upper side of the X-axis as illustrated in FIG. 28. Further, on the extending portion 184A, the inner end side portion 1847 includes a step formed with a lower surface (also referred to as an inner end side lower surface) 1848 thereof higher than a lower surface (peripheral wall side lower surface) 1844 on a peripheral wall side by a predetermined distance in the X-axis direction. That is, a cutout portion 1846 is provided on the lower side of the inner end side portion 1847. Therefore, when the inner tubular portion 18 is placed on the upper surface of the metal ring 121 in step S25 and the upper surface of the metal ring 121 and the lower end of the inner tubular portion 18 are welded to each other as in the fifth embodiment, the inner end side lower surface 1848 is disposed at a higher position than the upper surface of the electrode unit 1A in contact with the peripheral wall side lower surface 1844. That is, the inner end side lower surface 1848 is disposed at a predetermined interval from the first electrode 11, and this interval between the inner end side lower surface 1848 and the first electrode 11 is a discharge gap 230.

Then, in step S30A, the explosive 15 is charged from the upper end opening of the inner tubular portion 18, and the internal space 180 is filled with the explosive 15, whereby the discharge gap 230 between the inner end side lower surface 1848 and the first electrode 11 is also filled with the explosive 15. Note that, when the filling with the explosive 15 is performed, fine vibration may be continuously applied to increase a fluidity of the explosive 15, facilitating easy entry of the explosive 15 between the inner end side lower surface 1848 and the first electrode 11. Further, after the area between the inner end side lower surface 1848 and the first electrode 11 is filled with the explosive 15, a process of applying pressure to the explosive 15 from the opening of the upper end portion 182 of the inner tubular portion 18 and pressing and compacting the explosive 15 (pressure-filling process) may be performed. In the present embodiment, the inner end side portion 1847 of the extending portion 184A is provided orthogonal to a pressure-filling direction of the explosive. Thus, even when the explosive 15 is subject to pressure-filling, it is possible to maintain a space capable of discharge between the inner end side lower surface 1848 and the first electrode 11.

In the initiator 10E of the present embodiment, when the actuation voltage is applied between the electrodes 11, 12, the explosive 15 with which the discharge gap 230 is filled is ignited by the discharge generated in the discharge gap 230, making it possible to achieve accurate actuation and improve reliability.

### Eighth Embodiment

In the present embodiment, a configuration is adopted in which the cover body 14 is used as part of the second electrode, and a discharge gap 240 is formed between the cover body 14 and the first electrode 11. Other configurations are the same as those in the fifth embodiment described above. Note that the other configurations may be the same as those of the first to third embodiments. In the present embodiment, elements common to those of the embodiments described above are denoted by the same reference signs or the like and description thereof will be omitted.

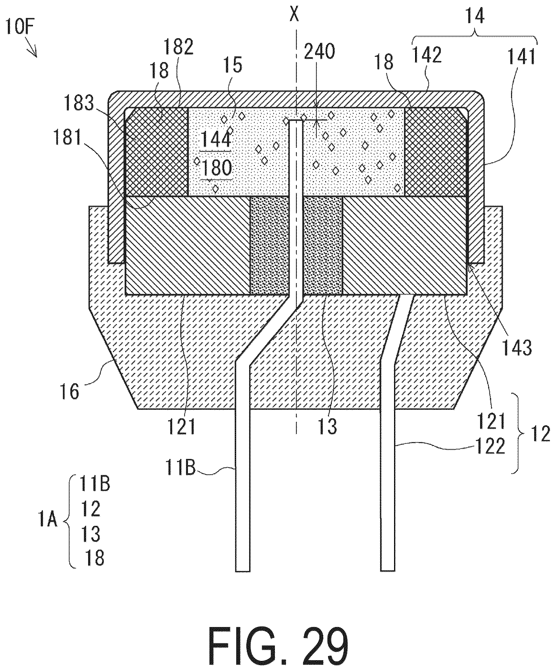

FIG. 29 is a view illustrating a configuration of an initiator 10F according to the seventh embodiment. The cover body 14 in the present embodiment is a member having conductivity and formed of a metal or the like, and is connected to the metal ring 121 by welding or the like in step S50 as in the embodiments described above, thereby constituting a portion of the second electrode 12. A first electrode 11B extends upward in the X-axis direction, an upper end of the first electrode 11B is disposed at a predetermined interval from the cover body 14, and this interval between the cover body 14 and the first electrode 11B is the discharge gap 240.

Then, as in the fifth embodiment, when the inner tubular portion 18 is filled with the explosive 15 in the explosive filling process of step S30A, the first electrode 11B is filled to the top with the explosive 15. That is, the filling is performed, interposing the explosive 15 between the cover body 14 and the first electrode 11B when the cover body 14 is attached.

In the initiator 10F of the present embodiment, when the actuation voltage is applied between the electrodes 11, 12, the explosive 15 with which this discharge gap 240 is filled is ignited by the discharge generated in the discharge gap 240, making it possible to achieve accurate actuation and improve reliability.

The embodiments of the initiator, the initiator device, and the method for manufacturing the initiator according to the present disclosure are described above; however, aspects disclosed in the present specification can be combined with any other features disclosed in the present specification.

### Reference Signs List

1 Housing
1A Electrode unit
8 Transfer chamber
10, 10B, 10C, 10D, 10E, 10F Initiator
11, 11B First electrode
12 Second electrode
13 Insulating member
14 Cover body
15 Explosive
16 Resin-made holding portion
17 Pressing die
18 Inner tubular portion
20, 20A Power supply unit
21 Drive unit
22 Battery
23 Control unit
24 Cable
25 Piezoelectric element
26 Hammer
27 Elastic body
28 Button
29 Locking portion
32 Bottom plate portion
60 Spark
71 Top wall portion
72 Side wall portion
90 Combustion chamber
100, 100A Gas generator
107 Cup body
108 Transfer chamber
110 Housing
111 Gas discharge port
112 Upper container
113 Lower container
120 Gas generating agent
121 Metal ring
122 Electro-conductive pin
123 Joining portion
124 Joining portion
129 Through hole
130 Transfer charge
140, 140A Initiator device
141 Circumferential wall
142 Top wall portion
143 Opening
144 Explosive accommodation portion
150 Enclosure
151 Operation target
180 Internal space
183 Circumferential wall
184, 184A Extending portion
210, 220, 230, 240 Discharge gap

## Claims

1. An initiator comprising:
a pair of electrodes;
an insulating member interposed between the pair of electrodes;
a cover body covering one end side of the pair of electrodes together with a space around the pair of electrodes; and
an explosive with which the space inside the cover body is filled, wherein
the pair of electrodes include, in the space, a discharge gap where a dielectric strength is lower than a dielectric strength of a portion where the insulating member is interposed.

2. The initiator according to claim 1, wherein
a void is formed between the explosive with which the space is filled and the discharge gap, and
the explosive and the discharge gap are disposed within a predetermined distance from each other.

3. The initiator according to claim 1 or 2, wherein
one of the pair of electrodes is a first electrode having a linear shape and the other is a second electrode including a ring portion having a ring shape, and
at least part of the first electrode is inserted into a through hole of the ring portion, and the electrode is provided between an inner circumferential surface of the ring portion defining the through hole and the first electrode.

4. The initiator according to any one of claims 1 to 3, further comprising:
an inner tubular portion having a tubular shape extending in one direction and including an internal space open at an end portion of the inner tubular portion, wherein
the inner tubular portion is disposed with the opening facing the electrode in the space of the cover body, and the internal space of the inner tubular portion is filled with the explosive.

5. The initiator according to claim 3, wherein
the second electrode further includes an inner tubular portion extending in one direction and including an internal space open at an end portion of the inner tubular portion,
the inner tubular portion is disposed in the space of the cover body while abutting against the ring portion at the end portion with the opening facing the electrode, includes an extending portion extending from a circumferential wall of the inner tubular portion toward the first electrode, and forms a discharge gap between the first electrode and the extending portion, and
the internal space of the inner tubular portion is filled with the explosive.

6. The initiator according to claim 5, wherein
the extending portion is an annular member protruding toward the internal space from an end portion of the circumferential wall of the inner tubular portion on the ring portion side.

7. The initiator according to claim 5, wherein
the extending portion extends from part of the circumferential wall of the inner tubular portion in a direction orthogonal to an extending direction of the internal space, overlaps the first electrode when viewed from the extending direction, and is disposed at a predetermined interval from the first electrode in the extending direction, the interval being the discharge gap.

8. The initiator according to claim 3, wherein
the cover body has conductivity and constitutes part of the second electrode, and
the discharge gap is formed between the first electrode and the cover body.

9. An initiator device comprising:
the initiator according to any one of claims 1 to 8; and
a power supply unit configured to supply power to the pair of electrodes, causing a discharge in the discharge gap.

10. A method for manufacturing an initiator, the method comprising:
integrating a first electrode and a second electrode with an insulating member interposed between the first electrode and the second electrode to form an electrode unit with a discharge gap between the first electrode and the second electrode;
filling an explosive accommodation portion in a cover body having a bottomed tubular shape with an explosive from an opening of the cover body;
fitting the electrode unit into the opening of the cover body such that the discharge gap of the electrode unit is brought into contact with or close to the explosive with which the cover body is filled; and
integrally joining the cover body and the electrode unit.

11. The method for manufacturing an initiator according to claim 10, comprising
pressing and compacting the explosive accommodated in the explosive accommodation portion, and forming a recessed portion on a surface of the explosive that comes into contact with the electrode unit, wherein
in the fitting of the electrode unit, the electrode unit is fitted into the opening of the cover body such that the discharge gap and the recessed portion are adjacent to each other.
